# EUROPEAN PATENT SPECIFICATION

(11) **EP 0 769 460 B1**
(45) Date of publication and mention of the grant of the patent: **26.01.2000**
(21) Application number: 96870132.6
(22) Date of filing: 17.10.1996
(51) Int. Cl.: B65G 47/14

(54) **Device for positioning objects with the form of a bar according to a regular pattern**
Vorrichtung zum Positionieren von stabförmigen Gegenständen in einem gleichmässigen Muster
Dispositif pour positionner des objets en forme de barres selon une configuration régulière

(30) Priority: 17.10.1995 BE 9500863
(43) Date of publication of application: 23.04.1997
(73) Proprietor: Wijnants, Erwin, 3550 Heusden-Zolder (BE)
(72) Inventor: Wijnants, Erwin, 3550 Heusden-Zolder (BE)
(74) Representative: Pieraerts, Jacques

(56) References cited:
- CH-A- 489 392
- DE-A- 2 802 188
- US-A- 2 324 246
- US-A- 2 456 031
- US-A- 3 469 672
- US-A- 3 752 293

## Description

The present invention relates to a device for positioning objects with the form of a bar, according to a regular pattern made essentially of an inclined disposed vibration table , consisting of a succession of the following compartments:
a) a first compartment in the form of a flat sheet onto which the objects are thrown from a production unit or a stocking compartment;
b) a second compartment which is formed by a series of grooves in which the objects are further travelling, and
c) a third compartment consisting of passways which are each connected to one of the grooves mentioned under b).

For the arrangement of objects, solutions have been proposed, whereby these objects are moved along an inclined plane, between partitions provided thereon. An example of a device according to this definition can be found in US patent US-A-3.469.672.

From this patent it should be remarked that the device described therein is designed for diverting objects but does not provide the possibility of offering objects with the form of a bar, i.e. objects which show a number of larger and a number of smaller sides, and in an arbitrary order, thus not ordered, that are supplied from a stocking compartment, always at their larger side for a further treatment, so that they can be treated in this desired position, or if so desired, be stacked and packed.

With the expression, "objects with the form of a bar" a.o. concrete clinkers are meant.

Clinkers, as is generally known, show six rectangular surfaces of which two are considered as large ones while the four others may be considered as small ones.

The invention has the goal of providing a device which allows to supply objects with the form of a bar or the like, that are arbitrarily supplied, from a production unit or a stocking compartment, in a well ordered way to a palletising device. To solve this problem, i.e. to arrange these objects in the desired order and to stack them in this order onto pallets, up to now no solution has been found to accomplish this with technically simple, but reliable means.

To solve the problem here described, the device according to the invention is characterised in that the grooves of the device are arranged side by side, of which the sides, two by two, define a right angle with an edge pointing downwardly and whereby each side defines an angle of 45° with the plane of the vibration table concerned in which grooves are provided at the bottom of which bumps appear which cause the canting of the objects while they are sliding over these bumps in a labile state.

Figure 1 shows in a schematic way, a top view of the part of the device to which the patent application relates.

Figure 2 is a cross section along the line II-II of figure 1.

Figure 3 is a cross section along the line III-III of figure 1.

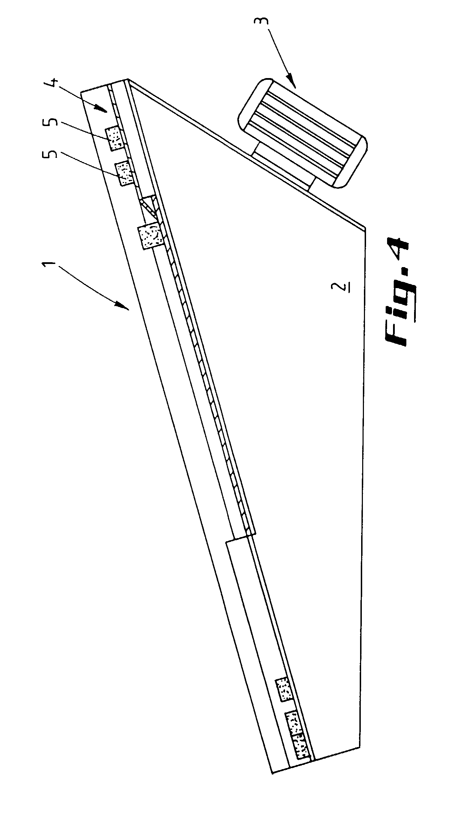

Figure 4 is a schematic side view of the device according to the invention.

The device shown in these figures is constructed in the form of a vibration table 1 width a frame 2 to which two vibration motors 3 are fixed. The angle under which the vibration table is positioned with respect to the horizontal plane, is, at least according to the here described embodiment, 17°. It should be clear that the choice of this angle, as well as the number of vibration motors is not binding for the invention.

The device according to the invention is on the other hand characterised by a succession of three compartments, namely a first compartment 4 to which the objects 5 with the form of a bar arrive in an arbitrary order.

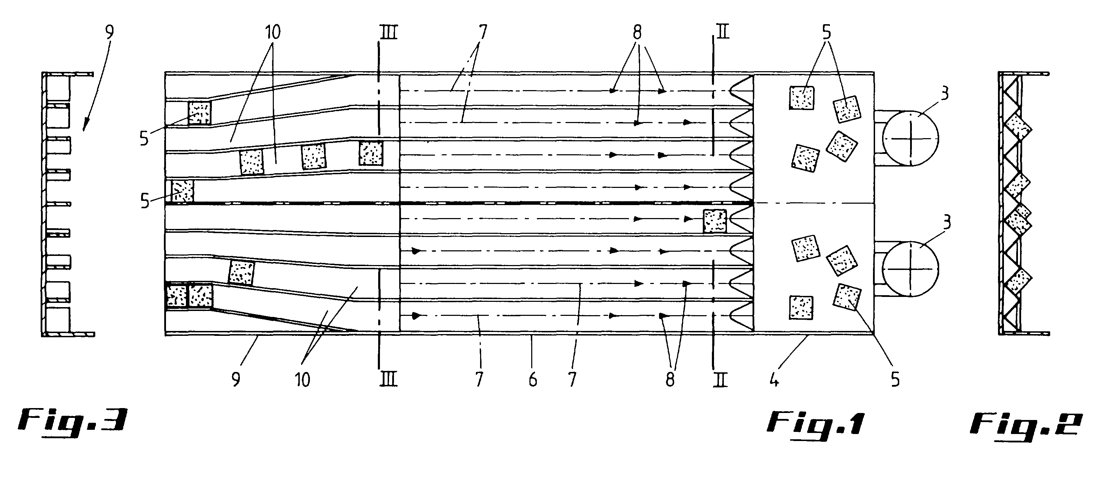

By the vibrational movements of the entire vibration table, the objets reach the second compartment 6, which is formed by a series of grooves 7 which are shown in cross section in figure 2.

In these grooves 7, the objects 5 with the form of a bar, take either a labile or a stabile position. In case the objects are moved downwardly as a consequence of the vibrations, they come into contact with the bumps 8 that are present in each groove 7. Stabile objects, i.e. objects which lean with a large side against a side of the groove 7 (or i.c. the objects have no squares as largest sides: objects which lean with a large and with one of the largest small sides against the sides of groove 7) pass the bumps 8 without canting. Labile objects on the other hand, i.e. these which rest with two small sides against the sides of groove 7 (or i.c. the objects have no squares as largest sides: these which rest with two small sides or with the large side and the smallest small side against the side of groove 7) will cant when they pass over the bumps 8, whereafter they can be regarded as being stable (i.e. resting with a large side against a side of groove 7 (or i.c. the objects have no squares as largest sides: with a large and with one of the largest small sides against the sides of groove 7).

Due to the presence of the bumps 8, all objects 5 reach the third compartment, i.e. the compartment 9, consisting of a number of passways 10, in a stabile position (and i.c. the largest sides of the objects are no squares, with their longitudinal axis pointing downwardly). In these passways they ly then with the larger side on a vibration table and they are positioned in the required position. The width of the passways 10 decreases downstream, so that the objects that are moving downwardly in these passways are delivered in the desired position.

Beyond the third compartment of the device, the objects with the form of a bar, can be conveyed to pallets, by means of the generally used and known technical means such as transporting means, a buffer zone and a conveyor belt. The latter can, as shoul be clear, only function correctly if all objects with the form of a bar, reach the latter sort and transport means in a well defined position.

From the description given above, it should be clear that the alleged goal can be achieved, with technically simple but reliable means. It should be clear that alterations can be applied to the described device, without extending beyond the scope of the invention, as far as the alterations correspond to the wording and the intent of the claims attached hereto.

## Claims

1. Device for positioning objects with the form of a bar, according to a regular pattern made essentially of an inclined disposed vibration table (1), consisting of a succession of the following compartments:
a) a first compartment (4) in the form of a flat sheet onto which the objects are thrown from a production unit or a stocking compartment;
b) a second compartment (6) which is formed by a series of grooves (7) in which the objects are further travelling, and
c) a third compartment (9) consisting of passways(10) which are each connected to one of the grooves (7) mentioned under b),
characterised in that said grooves (7) are arranged side by side, of which the sides, two by two, define a right angle with an edge pointing downwardly and whereby each side defines an angle of 45° with the plane of the vibration table concerned in which grooves (7) are provided at the bottom of which bumps (8) appear which cause the canting of the objects while they are sliding over these bumps in a labile state.

2. Device according to claim 1, characterised in that said passways (10) have a width which decreases downstream.

3. Device according to any one of claims 1 and 2, characterised in that said vibration table (1) is arranged at an angle between almost 10° and almost 24°.

## Patentansprüche

1. Vorrichtung zum Positionieren von stangenförmigen Objekten gemäß einem regelmäßigen Muster, die im wesentlichen aus einem geneigt angeordneten Vibrationstisch (1) aufgebaut ist, mit einer Abfolge der nachstehenden Fächer:
a) ein erstes Fach (4) in Form einer flachen Platte, auf die Objekte von einer Produktionseinheit oder einem Lagerfach geworfen werden,
b) ein zweites Fach (6), das aus einer Reihe von Rillen (7) aufgebaut ist, in denen die Objekte sich weiterbewegen, und
c) ein drittes, aus Passagen (10) bestehendes Fach (9), das jeweils mit einer der in b) erwähnten Rillen (7) verbunden ist,
dadurch gekennzeichnet, daß die Rillen (7) Seite an Seite angeordnet sind, wobei die Seiten jeweils zu zweit einen rechten Winkel mit einem nach unten zeigenden Rand definieren und daß dadurch jede Seite einen Winkel von 45° mit der Ebene des Vibrationstisches definiert, in dessen Boden Rillen (7) vorgesehen sind, auf denen Höcker (8) erscheinen, die ein Kippen der Objekte verursachen, während sie in einem labilen Zustand über diese Höcker gleiten.

2. Vorrichtung nach Anspruch 1, dadurch gekennzeichnet, daß die Passagen (10) eine sich in Bewegungsrichtung verringernde Breite aufweisen.

3. Vorrichtung nach einem der Ansprüche 1 und 2, dadurch gekennzeichnet, daß der Vibrationstisch (1) unter einem Winkel zwischen etwa 10° und etwa 24° angeordnet ist.

## Revendications

1. Dispositif pour positionner des objets en forme de barre selon une configuration régulière, consistant essentiellement en une table vibrante (1) disposée de manière inclinée, comprenant les compartiments successifs suivants:
a) un premier compartiment (4) en forme de plaque plane sur laquelle les objets sont jetés en provenance d'une unité de production ou d'un compartiment de stockage,
b) un deuxième compartiment (6) qui est formé d'une série de rainures (7) dans lesquelles les objets continuent à progresser, et
c) un troisième compartiment (9) consistant en passages (10) qui sont connectés à l'une des rainures (7) mentionnées sous b),
caractérisé en ce que lesdites rainures (7) sont disposées côte à côte, leurs côtés définissant deux par deux un angle droit avec une arête pointant vers le bas et chaque côté définissant un angle de 45° avec le plan de la table vibrante concernée dans laquelle sont agencées les rainures (7) au fond desquelles apparaissent des bosses (8) qui provoquent le culbutage des objets au moment où ils glissent par-dessus les bosses dans un état instable.

2. Dispositif selon la revendication 1, caractérisé en ce que lesdits passages (10) ont une largeur qui diminue en aval.

3. Dispositif selon une quelconque des revendications 1 et 2, caractérisé en ce que ladite table vibrante (1) est disposée à un angle ayant entre environ 10° et environ 24°.
